# EUROPÄISCHE PATENTSCHRIFT

(11) **EP 1 311 632 B1**
(45) Veröffentlichungstag und Bekanntmachung des Hinweises auf die Patenterteilung: **09.03.2005**
(21) Anmeldenummer: 01958004.2
(22) Anmeldetag: 23.07.2001
(51) Int. Cl.: C09D 11/00, C09D 11/10, C08F 2/48, C08G 2/02

(54) **VERFAHREN ZUM BESCHICHTEN VON SUBSTRATEN**
METHOD FOR COATING SUBSTRATES
PROCEDE POUR LE REVETEMENT DE SUBSTRATS

(30) Priorität: 24.07.2000 DE 10035961
(43) Veröffentlichungstag der Anmeldung: 21.05.2003
(73) Patentinhaber: BASF AKTIENGESELLSCHAFT, 67056 Ludwigshafen (DE)
(72) Erfinder: BECK, Erich, 68526 Ladenburg (DE); RAULFS, Friedrich-Wilhelm, 68161 Mannheim (DE); SIEMENSMEYER, Karl, 67227 Frankenthal (DE)
(74) Vertreter: Kinzebach, Werner, Dr.
(86) Internationale Anmeldenummer: PCT/EP2001/008492
(87) Internationale Veröffentlichungsnummer: WO 2002/008346

(56) Entgegenhaltungen:
- DE-A- 2 551 347
- US-A- 4 194 955
- US-A- 5 200 490
- DATABASE WPI Section Ch, Week 198717 Derwent Publications Ltd., London, GB; Class A97, AN 1987-120095 XP002180308 & JP 62 064874 A (DAINICHISEIKA COLOR & CHEM MFG), 23. März 1987 (1987-03-23)
- DATABASE WPI Section Ch, Week 199312 Derwent Publications Ltd., London, GB; Class A18, AN 1993-096808 XP002180309 & JP 05 039335 A (YOKOHAMA RUBBER CO LTD), 19. Februar 1993 (1993-02-19)

## Beschreibung

Die vorliegende Erfindung betrifft ein Verfahren zum Beschichten von Substraten, umfassend:
a. Aufbringen eines fließfähigen Beschichtungsmittels auf das zu beschichtende Substrat und
b. Aushärten der so erhaltenen, feuchten Beschichtung durch Einwirkung von UV-Strahlung.

Die Herstellung von Beschichtungen durch Aufbringen eines fließfähigen Beschichtungsmittels auf das zu beschichtende Substrat und das anschließende Aushärten der Beschichtung durch Einwirkung energiereicher Strahlung auf die so erhaltene nasse Beschichtung ist aus dem Stand der Technik bekannt, beispielsweise aus P.K.T. Oldring et al. in Chemistry and Technology of UV and EB Formulation for Coatings, Inks and Paints, SITA Technology, London (1991).

Die hierbei verwendeten Beschichtungsmittel enthalten in der Regel organische Polymere oder Prepolymere, die mehrere ethylenisch ungesättigte Doppelbindungen oder Epoxygruppen pro Molekül aufweisen. Bei Einwirkung von energiereicher Strahlung, z. B. UV-Strahlung, auf das mit dem Beschichtungsmittel versehene Substrat findet eine Photopolymerisation dieser Reaktivgruppen statt, in deren Verlauf sich in der noch nicht gehärteten Beschichtung ein polymeres Netzwerk ausbildet. Auf diese Weise gelangt man zu einer festen Beschichtung. Man spricht in diesem Zusammenhang auch von strahlungshärtbaren Beschichtungen. Dementsprechend bezeichnet man die in diesen Beschichtungsmitteln enthaltenen Polymere oder Oligomere mit Reaktivgruppen auch als strahlungshärtbare Bindemittel. Um eine ausreichende Festigkeit der Beschichtung zu erreichen, müssen derartige Polymere einen gewissen Gehalt an Reaktivgruppen aufweisen, der in der Regel 2 mol/kg Polymer (bzw. Oligomer) nicht unterschreitet.

Strahlungshärtbare Beschichtungen werden häufig zur Beschichtung von Holz oder Papier, z. B. für Parkett oder in der Möbelindustrie, eingesetzt. Auch wurde über die Verwendung von strahlungshärtbaren Beschichtungsmitteln in Form von UV-härtbaren Druckfarben und UV-härtbaren Tinten berichtet, z. B. in der EP-A 658 607, der JP-A 48922/96 und der WO 99/01517. Die dort beschriebenen Tinten und Druckfarben enthalten als Bindemittel für die Pigmente ein strahlungshärtbares Bindemittelsystem auf Basis ethylenisch ungesättigter Polymere, die bei Einwirkung von UV-Strahlung photopolymerisieren und so die Pigmente auf der bedruckten Oberfläche fixieren.

Der Vorteil strahlungshärtbarer Beschichtungen liegt zum einen in ihrer hohen mechanischen Stabilität. Außerdem lassen sich strahlungshärtbare Beschichtungsmittel sehr viel rascher verarbeiten als konventionelle Beschichtungsmittel, da das Aushärten der Beschichtung durch eine rasche Photopolymerisation und nicht durch einen langsamen Trocknungsprozess oder thermische Vernetzungsreaktionen erreicht wird. Andererseits liegt es in der reaktiven Natur dieser Beschichtungsmittel, dass sie unter Lichtausschluss gelagert und gehandhabt werden müssen und auch gegenüber Sauerstoff nur begrenzt stabil sind. Weiterhin ist oftmals die Haftung derartiger Beschichtungsmittel auf glatten, nicht quellbaren Oberflächen nicht ausreichend.

Konventionelle Tinten, die als Bindemittel Polyvinylbutyral enthalten sind aus der DE-A 33 15 741 bekannt. Außerdem werden in der Japanischen Offenlegungsschrift H8-239614 Polyacetale als Cobindemittel in thermisch härtbaren Tinten vorgeschlagen. Derartige Tinten zeigen eine schlechte Haftung auf bedruckten Substraten, insbesondere auf Kunststoffen oder Lackoberflächen.

Angesichts der prinzipiellen Vorteile der Strahlungshärtung bei der Herstellung von Beschichtungen liegt der vorliegenden Erfindung die Aufgabe zugrunde, ein weiteres Verfahren zur Herstellung von Beschichtungen unter Anwendung energiereicher Strahlung bereitzustellen. Das Verfahren soll insbesondere auch zum Bedrucken von Substraten geeignet sein und die Nachteile des Standes der Technik überwinden.

Es wurde überraschenderweise gefunden, dass diese Aufgabe durch ein Verfahren gelöst wird, bei dem man als Bindemittel ein Polymer einsetzt, das weniger als 1 mol/kg reaktive Gruppen, ausgewählt unter ethylenisch ungesättigten Doppelbindungen und Epoxygruppen und gleichzeitig wenigstens 2 mol/kg funktionelle Gruppen der nachstehend definierten, allgemeinen Formel I aufweist: 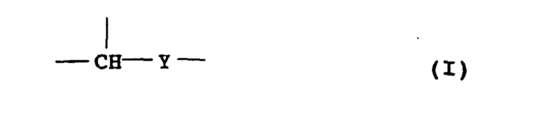 worin Y für NH oder O steht.

Demnach betrifft die vorliegende Erfindung ein Verfahren zum Beschichten, insbesondere Bedrucken von Substraten und besonders bevorzugt zum Erzeugen dünner Schichten mit Trockenschichtdicken von im Mittel maximal 10 µm, umfassend die folgenden Schritte:
a. Aufbringen eines fließfähigen Beschichtungsmittels auf das zu beschichtende Substrat und
b. Aushärten der so erhaltenen, feuchten Beschichtung durch Einwirkung von UV-Strahlung,
dadurch gekennzeichnet, dass das Beschichtungsmittel frei ist von Photoinitiatoren und ein Polymer A als Bindemittel enthält, das weniger als 1 mol/(kg Polymer A) Reaktivgruppen sowie mindestens 2 mol/(kg Polymer A), vorzugsweise 3 mol/kg, insbesondere 4 mol/kg, besonders bevorzugt 5 mol/kg funktionelle Gruppen der zuvor definierten Formel I 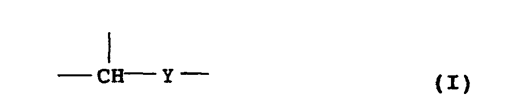 aufweist, die durch die Teilstrukturen der Formel IA, IB oder IC 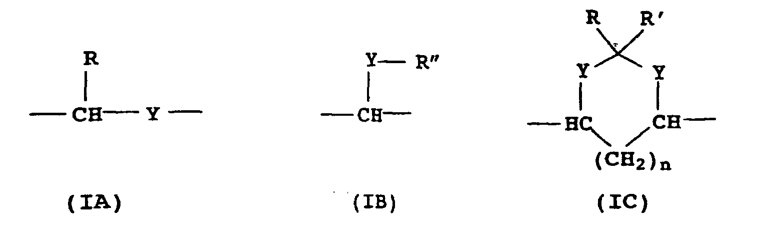 realisiert werden, worin
- R, R': unabhängig voneinander für Wasserstoff oder C₁-C₄-Alkyl
- R": für C₁-C₁₀-Alkyl stehen,
- Y: die zuvor genannte Bedeutung hat; und
- n: 0 oder 1 bedeutet,
wobei die Struktureinheiten der Formel IA, IB oder IC Bestandteile der Polymerkette sind.

Der Begriff "Beschichten" umfasst hier sowohl das Bedrucken, das Beschreiben oder das Beschichten in sonstiger Weise. Teilstrukturen und funktionelle Gruppen im Sinne der Erfindung sind definierte Gruppen von Atomen im Polymeren A.

Bei den Strukturelementen der allgemeinen Formeln IA, IB und IC handelt es sich um Ethergruppen, Aminogruppen, Acetale, Ketale, Aminale und Halbaminale sowie die Alkohol- oder Amin-Teile in Estern oder Aminen, die jeweils an wenigstens einem Kohlenstoffatom, das dem Heteroatom benachbart ist, ein Wasserstoffatom tragen.

Unter den funktionellen Gruppen der allgemeinen Formeln I sind solche Strukturelemente bevorzugt, in denen Y für Sauerstoff steht. R in Formel IA steht vorzugsweise für Wasserstoff. In Formel IC stehen vorzugsweise wenigstens einer der beiden Reste R oder R' für Wasserstoff. Bevorzugte Polymere A sind solche, die Struktureinheiten der allgemeinen Formel IC aufweisen und hierunter wiederum solche, worin Y für Sauerstoff steht.

Polymere A weisen in der Regel ein gewichtsmittleres Molekulargewicht von 1000, vorzugsweise wenigstens 2000, insbesondere wenigstens 5000, z. B. 5000 bis 5000000, auf.

Beispiele für Polymere A, die Teilstrukturen der allgemeinen Formel IA mit Y = Sauerstoff aufweisen, sind Polyoxymethylen (POM), Poly-C₂-C₄-alkylenoxide, wie Polyethylenoxid, Polypropylenoxid, Polybutylenoxid, Polyisobutylenoxid, weiterhin Polytetrahydrofuran, Polyester aliphatischer Diole, Polyetherester, Polyetheramide, Polyetherurethane und dergleichen.

Beispiele für Polyester aliphatischer Diole sind die Polyester aliphatischer und/oder aromatischer Dicarbonsäuren, wie Phthalsäure, Terephthalsäure und Isophthalsäure, Adipinsäure, Maleinsäure, Fümarsäure oder Sebacinsäure mit C₂-C₁₀-Alkandiolen, wie Ethylenglykol, 1,4-Butandiol und 1,6-Hexandiol sowie hydrierte Produkte. Beispiele für Polyetherester sind die Polyester der vorgenannten Dicarbonsäuren mit Polyetherdiolen, wie Polyethylenoxid. Dementsprechend handelt es sich bei den Polyetheramiden um Polyamide der vorgenannten Dicarbonsäuren mit Polyethern, die terminale Aminogruppen aufweisen.

Beispiele für Polymere A mit Teilstrukturen IA sind weiterhin Polyurethane aliphatischer und/oder aromatischer Diisocyanate mit aliphatischen Diolen sowie Polyurethane der vorgenannten Diisocyanate mit Polyetherdiolen (Polyetherurethane).

Beispiele für Polymere A mit Struktureinheiten IB mit Y = Sauerstoff sind die Homo- und Copolymere von C₁-C₂₀-Vinylethern, wie Methylvinylether, Ethylvinylether, Isobutylvinylether und Octadecylvinylether. Als Comonomere für die Vinylether kommen beispielsweise Maleinsäureanhydrid, Vinylacetat, Vinylchlorid, styrol oder auch Kohlendioxid in Betracht.

Bei den Polymeren mit Struktureinheiten der allgemeinen Formel IC mit Y = Sauerstoff handelt es sich um acetalisierten bzw. ketalisierten Polyvinylalkohol, dessen Hydroxygruppen in polymeranaloger Reaktion mit Aldehyden bzw. Ketonen acetalisiert bzw. ketalisiert worden sind. Beispiele für derartige Polymere sind das Umsetzungsprodukt von Polyvinylalkohol mit Formaldehyd (Polyvinylformal), das Umsetzungsprodukt von Polyvinylalkohol mit Butyraldehyd (Polyvinylbutyral) und das Umsetzungsprodukt von Polyvinylalkohol mit Aceton (Polyvinyldimethylketal). In den Polymeren A dieses Typs liegen in der Regel wenigstens 50 Mol-%, vorzugsweise wenigstens 60 Mol-%, z. B. 75 bis 90 Mol-% , der Hydroxylgruppen in acetalisierter bzw. ketalisierter Form vor. Derartige Polymere weisen in der Regel ein gewichtsmittleres Molekulargewicht von wenigstens 10000 Dalton und insbesondere im Bereich von 20000 bis 250000 Dalton auf.

Beispiele für Polymere A, in denen Y in den Struktureinheiten IA, IB und IC für NH steht, sind Polyalkylenimine, wie Polyethylenimin, Polyamide der vorgenannten Dicarbonsäuren mit aliphatischen Diaminen, wie Ethylendiamin, 1,4-Butylendiamin, Hexamethylendiamin und Isophorondiamin.

Bevorzugte Polymere A sind die Poly-C₁-C₁₀-alkylvinylether, Polyoxymethylen, Poly-C₂-C₄-alkylenoxide, Polyetherester, Polyetheramide, Polyetherurethane, acetalisierte Polyvinylalkohole und ketalisierte Polyvinylalkohole, wobei die acetalisierten und die ketalisierten Polyvinylalkohole besonders bevorzugt sind. Ganz besonders bevorzugt sind acetalisierte Polyvinylalkohole und hierunter besonders bevorzugt Polyvinylbutyral. Selbstverständlich können auch Mischungen der vorgenannten Polymere A als Bindemittel eingesetzt werden.

Neben den Polymeren A können die im erfindungsgemäßen Verfahren eingesetzten fließfähigen Beschichtungsmittel auch ethylenisch ungesättigte Cobindemittel, d. h. strahlungshärtbare Prepolymere oder Polymere mit einem Doppelbindungsgehalt von wenigstens 2 Mol/kg (Pre)polymer und/oder ein- oder mehrfach ethylenisch ungesättigte Monomere enthalten. Der Anteil des ethylenisch ungesättigten Cobindemittels kann bis zu 90 Gew.-%, bezogen auf die Gesamtmenge an Bindemittelbestandteilen im Beschichtungsmittel, beispielsweise 10 bis 90 Gew.-% oder insbesondere 20 bis 80 Gew.-% betragen. In anderen Ausführüngsformen enthält das Beschichtungsmittel kein ethylenisch ungesättigtes Cobindemittel.

Unter ethylenisch ungesättigten Polymeren oder Prepolymeren versteht man oligomere oder polymere Verbindungen, die wenigstens 2 mol/kg, z. B. 2 bis 10 mol/kg und insbesondere 2,5 bis 7 mol/kg (Pre)polymer, ethylenisch ungesättigte Doppelbindungen, vorzugsweise in Form von Vinyl, Allyl, Acryloyl oder Methacryloylgruppen vorliegen. Hier und im Folgenden versteht man unter ethylenisch ungesättigten Prepolymeren oligomere Verbindungen, die im Unterschied zu den niedermolekularen ethylenisch ungesättigten Monomeren ein zahlenmittleres Molekulargewicht von wenigstens 300 g/mol aufweisen. Der Übergang zwischen Polymeren und Oligomeren ist dabei fließend. In der Regel versteht man unter den prepolymeren Verbindungen mit einem Molgewicht von bis zu 2500 g/mol. Verbindungen mit einem höheren Molekulargewicht werden dagegen in der Regel als Polymere bezeichnet. Erfindungsgemäß bevorzugt umfassen die Beschichtungsmittel als ethylenisch ungesättigte Cobindemittel wenigstens ein ethylenisch ungesättigtes Prepolymer und gegebenenfalls ein ethylenisch ungesättigtes Monomer.

Als ethylenisch ungesättigte Cobindemittel kommen auch ein- oder mehrfach ethylenisch ungesättigte Monomere in Betracht, die im Unterschied zu den Prepolymeren in der Regel ein zahlenmittleres Molekulargewicht von weniger als 400 g/mol aufweisen. Im Zusammenhang mit strahlungshärtbaren Beschichtungen bezeichnet man diese Monomere auch als Reaktivverdünner. Die Reaktivverdünner können als alleiniges ethylenisch ungesättigtes Cobindemittel oder zusammen mit den vorgenannten ethylenisch ungesättigten Prepolymeren oder Polymeren eingesetzt werden, wobei der Doppelbindungsgehalt dieser Mischungen in der Regel die oben angegebenen Werte aufweist. In den Mischungen aus Reaktivverdünner und ethylenisch ungesättigten (Pre)polymeren liegt das Gewichtsverhältnis von Reaktivverdünner zu (Pre)polymer vorzugsweise im Bereich von 50:1 bis 1:50, vorzugsweise 10:1 bis 1:10.

Beispiele für ethylenisch ungesättigte Polymere bzw. Prepolymere sind Polyester(meth)acrylate, Urethan(meth)acrylate, Epoxid(meth)acrylate, Melaminacrylate und Silikonacrylate, wobei die (Meth)acrylate auch mit tertiären Aminogruppen modifiziert sein können.

Bei den Polyester(meth)acrylaten handelt es sich um die (Meth)Acrylsäureester von Polyesterolen, die gesättigt oder ungesättigt sein können. Als Polyesterole kommen z. B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltigen Polyester sind dem Fachmann bekannt. Bevorzugt können als Dicarbonsäuren Bernsteinsäure, Glutarsäure, Adipinsäure, Sebacinsäure, Maleinsäure, Fumarsäure, o-Phthalsäure, deren Isomere und Hydrierungsprodukte sowie veresterbare Derivate, wie Anhydride oder Dialkylester der genannten Säuren, eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyalkylenglykole auf Basis von Ethylenglykol und Propylenglykol in Betracht. Polyester (meth)acrylate können in mehreren Stufen oder auch einstufig, wie in der EP-A-279 303 beschrieben, aus (Meth)Acrylsäure, Polycarbonsäure und Polyol hergestellt werden.

Epoxid(meth)acrylate sind z. B. solche, wie sie durch dem Fachmann bekannte Umsetzung von epoxidierten Olefinen oder Mono-, Di- oder Polyglycidylethern, wie Bisphenol-A-diglycidylether, mit (Meth)Acrylsäure erhältlich sind.

Bei Urethan(meth)acrylaten handelt es sich insbesondere um Umsetzungsprodukte von Hydroxyalkyl(meth)acrylaten mit Poly- bzw. Diisocyanaten.

Als Reaktivverdünner eignen sich beispielsweise vinylgruppenhaltige Monomere, insbesondere N-Vinylverbindungen wie N-Vinylpyrrolidon, N-Vinylcaprolactam und N-Vinylformamid und Vinylether, wie Ethyl-, Propyl-, Isopropyl-, Butyl-, Isobutyl-, tert.-Butyl-, Amyl-, 2-Ethylhexyl-, Dodecyl-, Octadecyl- und Cyclohexylvinylether, Ethylenglykolmono- und -divinylether, Di-, Triund Tetraethylenglykolmono- und -divinylether, Polyethylenglykoldivinylether, Ethylenglykolbutylvinylether, Triethylenglykolmethylvinylether, Polyethylenglykolmethylvinylether, Butandiolmono- und -divinylether, Hexandiolmono- und -divinylether, Cyclohexandimethanolmono- und -divinylether, Trimethylolpropantrivinylether, Aminopropylvinylether, Diethylaminoethylvinylether und Polytetrahydrofurandivinylether, Vinylester, wie Vinylacetat, -propionat, -stearat und -laurat, und Vinylaromaten, wie Vinyltoluol, Styrol, 2- und 4-Butylstyrol und 4-Decylstyrol, sowie acrylathaltige Monomere, wie Phenoxyethylacrylat, tert.-Butylcyclohexylacrylat, Hexandioldiacrylat, Dipropylenglykoldiacrylat, Tripropylenglykoldiacrylat und Trimethylolpropantriacrylat.

Als Cobindemittel kommen auch Epoxygruppen-haltige Verbindungen in Betracht. Beispiele hierfür sind: Cyclopentenoxid, Cyclohexenoxid, epoxidiertes Polybutadien, epoxidiertes Sojabohnenöl, (3',4'-Epoxycyclohexylmethyl)-3,4-epoxycyclohexancarboxylat und Glycidylether, z.B. Butandioldiglycidylether, Hexandioldiglycidylether, Bisphenol-A-Diglycidylether und Pentaerytrithbiglycidylether.

Im erfindungsgemäßen Verfahren können Beschichtungsmittel eingesetzt werden die frei sind von Photoinitiatoren.

Die im erfindungsgemäßen Verfahren eingesetzten Beschichtungsmittel können außerdem zur Farbgebung der Beschichtung ein oder mehrere organische oder anorganische, vorzugsweise feinteilige Pigmente enthalten. Als organische Pigmente sind hier auch Küpenfarbstoffe zu verstehen.

Beispiele für geeignete Pigmente sind:
Organische Pigmente:
- Monoazopigmente:
   C.I. Pigment Brown 25;
   C.I. Pigment Orange 5, 13, 36 und 67;
   C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 251, 112, 146, 170, 184, 210 und 245;
   C.I. Pigment Yellow 1, 3, 73, 74, 65, 97, 151 und 183;
- Disazopigmente:
   C.I. Pigment Orange 16, 34 und 44;
   C.I. Pigment Red 144, 166, 214 und 242;
   C.I. Pigment Yellow 12, 13, 14, 16, 17, 81, 83, 106, 113, 126, 127, 128, 155, 174, 176 und 188;
- Anthanthronpigmente:
   C.I. Pigment Red 168
   (C.I. Vat Orange 3);
- Anthrachinonpigmente:
   C.I. Pigment Yellow 147 und 177;
   C.I. Pigment Violet 31;
- Anthrapyrimidinpigmente:
   C.I. Pigment Yellow 108
   (C.I. Vat Yellow 20);
- Chinacridonpigmente:
   C.I. Pigment Red 122, 202 und 206;
   C.I. Pigment Violet 19;
- Chinophthalonpigmente:
   C.I. Pigment Yellow 138;
- Dioxazinpigmente:
   C.I. Pigment Violet 23 und 37;
- Flavanthronpigmente:
   C.I. Pigment Yellow 24
   (C.I. Vat Yellow 1);
- Indanthronpigmente:
   C.I. Pigment Blue 60 (C.I. Vat Blue 4)
   und 64 (C.I. Vat Blue 6);
- Isoindolinpigmente:
   C.I. Pigment Orange 69;
   C.I. Pigment Red 260;
   C.I. Pigment Yellow 139 und 185;
- Isoindolinonpigmente:
   C.I. Pigment Orange 61;
   C.I. Pigment Red 257 und 260;
   C.I. Pigment Yellow 109, 110, 173 und 185;
- Isoviolanthronpigmente:
   C.I. Pigment Violet 31
   (C.I. Vat Violet 1);
- Metallkomplexpigmente:
   C.I. Pigment Yellow 117, 150 und 153;
   C.I. Pigment Green 8;
- Perinonpigmente:
   C.I. Pigment Orange 43
   (C.I. Vat Orange 7);
   C.I. Pigment Red 194
   (C.I. Vat Red 15);
- Perylenpigmente:
   C.I. Pigment Black 31 und 32;
   C.I. Pigment Red 123, 149, 178, 179
   (C.I. Vat Red 23), 190 (C.I. Vat Red 29) und 224;
   C.I. Pigment Violet 29;
- Phthalocyaninpigmente:
   C.I. Pigment Blue 15, 15:1, 15:2, 15:3, 15:4, 15:6 und 16;
   C.I. Pigment Green 7 und 36;
- Pyranthronpigmente:
   C.I. Pigment Orange 51;
   C.I. Pigment Red 216
   (C.I. Vat Orange 4);
- Thioindigopigmente:
   C.I. Pigment Red 88 und 181
   (C.I. Vat Red 1);
   C.I. Pigment Violet 38
   (C.I. Vat Violet 3);
- Triarylcarboniumpigmente:
   C.I. Pigment Blue 1, 61 und 62;
   C.I. Pigment Green 1;
   C.I. Pigment Red 81, 81:1 und 169;
   C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22;

Küpenfarbstoffe (außer den bereits oben genannten):
- C.I. Vat Yeliow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;
anorganische Pigmente:
- Weißpigmente: Titandioxid (C.I. Pigment White 6), Zinkweiß, Farbenzinkoxid; Zinksulfid, Lithopone; Bleiweiß;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36); Ultramarinblau; Eisenblau (C.I. Pigment Blue 27); Manganblau;
   Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31), Chromorange;
   Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinophthalonpigmente, Phthalocyaninpigmente, Triarylcarboniumpigmente (Alkaliblaupigmente, Farbstoffsalze mit komplexen Anionen) und Ruß zu nennen.

Das enthaltene Pigment sollte möglichst feinteilig sein. Bevorzugt haben 95 %, besonders bevorzugt 99 %, der Pigmentteilchen eine Teilchengröße ≤ 1 µm. Für einige Ausführungsformen des erfindungsgemäßen Verfahrens, insbesondere das Ink-Jet-Verfahren, ist es vorteilhaft, wenn alle Pigmentteilchen eine Teilchengröße von maximal 1 µm, insbesondere maximal 0,8 µm und besonders bevorzugt maximal 0,5 µm aufweisen. Derartige Feinheiten erreicht man in der Regel durch Filtration über Filter mit geeigneter Porengröße.

Die Pigmentteilchen können unterschiedliche Form aufweisen und dementsprechend das Fließverhalten der Pigmentzubereitungen beeinflussen. Nichtisometrische Pigmentteilchen führen in der Regel zu höheren Fließviskositäten und zeigen oft kein Newtonsches Fließverhalten, während isometrische Pigmentteilchen im Allgemeinen bei gleicher Pigmentkonzentration niedriger viskose Zubereitungen ergeben und meist Newtonsches Fließverhalten zeigen.

Der Pigmentgehalt in den erfindungsgemäßen Beschichtungsmitteln hängt naturgemäß von dem jeweils gewünschten Anwendungszweck und der gewünschten Farbtiefe ab. In der Regel liegt er jedoch im Bereich von 0,5 bis 50 Gew.-% und insbesondere im Bereich von 1 bis 20 Gew.-%, bezogen auf das Gesamtgewicht des Beschichtungsmittels bzw. im Bereich von 5 bis 80 Gew.-% und insbesondere im Bereich von 10 bis 70 Gew.-%, bezogen auf die Gesamtmenge aus Pigment und Bindemittel (Polymer A und gegebenenfalls Cobindemittel).

Je nach Anwendungszweck ist das Beschichtungsmittel in einer geeigneten, fließfähigen Form formuliert. Geeignete fließfähige Formen umfassen sowohl dünnflüssige Lösungen, feinteilige Dispersionen oder zähflüssige Pasten, in denen das Bindemittel dispergiert oder vorzugsweise gelöst vorliegt. Entsprechend enthalten die fließfähigen Beschichtungsmittel in der Regel wenigstens ein organisches oder wässriges Lösungs- und/oder Verdünnungsmittel.

Das Aufbringen der fließfähigen Beschichtungsmittel in Schritt a des erfindungsgemäßen Verfahrens erfolgt in der für das jeweilige Beschichtungsverfahren üblichen Weise. Bevorzugte Ausführungsform des erfindungsgemäßen Beschichtungsverfahren sind Druckverfahren. Beispiele für Druckverfahren sind Flexo-Druck, Offsetdruck, Siebdruck, Tiefdruck sowie das Ink-Jet-Verfahren. Eine besonders bevorzugte Ausführungsform des erfindungsgemäßen Verfahrens ist das Ink-Jet-Verfahren.

Beim Ink-Jet-Verfahren verwendet man üblicherweise niedrigviskose pigmenthaltige Flüssigkeiten (im Folgenden als Tinten bezeichnet), die in kleinen Tröpfchen direkt auf das Substrat gesprüht werden. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben. Selbstverständlich können die Beschichtungsmittel auch in anderer Weise, beispielsweise durch Rakeln, Walzen, Streichen, Tauchen oder Sprühen, auf das zu beschichtende Substrat aufgebracht werden. Außerdem können die fließfähigen Beschichtungsmittel in Form einer Schreibtinte auf das zu beschichtende Substrat aufgebracht werden. Derartige Verfahren sind dem Fachmann bekannt.

Das Aushärten der in Schritt a. erhaltenen, noch feuchten Beschichtung erfolgt in Schritt b. erfindungsgemäß durch Einwirkung von U.V - Strahlung. Schritt b. kann sowohl unter Normalatmosphäre, bei Unterdruck oder unter einer Inertgasatmosphäre durchgeführt werden. Unter U.V - Strahlung versteht man die Bestrahlung mit UV-Licht, vorzugsweise mit einer Wellenlänge λ ≤ 450 nm, insbesondere λ ≤ 400 nm und besonders bevorzugt λ ≤ 350 nm, z. B. 220 bis 350 nm. Es können aber auch Lichtquellen mit einem Anteil an sichtbarem Licht verwendet werden, solange der Hauptanteil der Strahlung Wellenlängen λ ≤ 450 nm und insbesondere λ ≤ 400 nm aufweist.

Die bevorzugt angewendete UV-Strahlung kann sowohl in Form einer kontinuierlich einwirkenden Strahlung, z.B. durch der beschichteten Oberfläche mit einer UV-Lampe, als auch in Form einer gepulsten Strahlung eingesetzt werden. Der Leistungseintrag bei einer kontinuierlichen Strahlung, beispielsweise durch Anwendung von Quecksilber-Dampf-Hochdruckstrahlern liegt in der Regel bei einer Lampenleistung von wenigstens 80 W/cm, vorzugsweise wenigstens 100 und insbesondere im Bereich von 120 bis 240 W/cm. Bei gepulster Strahlung, beispielsweise durch Anwendung von Blitzlampen, reichen in der Regel auch geringere Leistungen aus.

Im erfindungsgemäßen Verfahren hat es sich als besonders günstig erwiesen, dass man in Schritt b. zusätzlich zur energiereichen Strahlung auch IR-Strahlung, d. h. Strahlung mit einem hohen Strahlungsanteil im Wellenlängenbereich > 800 nm einwirken lässt. Als IR-Quellen kommen dabei sowohl zusätzliche IR-Strahler sowie solche der vorgenannten UV-Lampen und Blitzlampen in Betracht, die neben dem Anteil energiereicher Strahlung zusätzlichen einen Anteil an Infrarotstrahlung liefern.

Für das erfindungsgemäße Beschichtungsverfahren, insbesondere das erfindungsgemäße Druckverfahren kommen alle Arten von Substratmaterialien in Betracht, z. B.:
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder und
- Lebensmittel.

Das erfindungsgemäße Verfahren hat sich besonders zur Beschichtung von nicht quellbaren Substraten bewährt.

Besonders vorteilhaft ist das erfindungsgemäße Verfahren zum Beschichten, insbesondere Bedrucken von Kunststoffoberflächen, insbesondere Kunststoffen mit Ether oder Estergruppen, beispielsweise Polyester, Polyoxymethylen, sowie lackierten Oberflächen geeignet, z. B. Oberflächen mit einer Beschichtung aus Nitrolack, Melaminlack, Alkydlack und Polyesterlack.

Das erfindungsgemäße Verfahren hat sich insbesondere zum Herstellen von sehr dünnen Beschichtungen erwiesen, wie man sie beispielsweise beim Bedrucken von Substraten erhält. Derartige Beschichtungen weisen in der Regel eine Schichtdicke nach Trocknen und UV-Härten (Trockenschichtdicke) von im Mittel maximal 10 µm, insbesondere maximal 5 µm und insbesondere im Bereich von 0,5 bis 5 µm auf.

Die im erfindungsgemäßen Verfahren eingesetzten Beschichtungsmittel, die einen Photoinitiator enthalten, sind neu und ebenfalls Gegenstand der vorliegenden Erfindung.

Gegenstand der vorliegenden Erfindung sind auch fließfähige Beschichtungsmittel, enthaltend
i) wenigstens ein Bindemittel, umfassend
   10 bis 100 Gew.-%, z. B. 10 bis 90 Gew.-%, insbesondere 20 bis 80 Gew.-% wenigstens eines Polymers A,
   0 bis 90 Gew.-%, z. B. 10 bis 90 Gew.-%, vorzugsweise 20 bis
   80 Gew.-% eines Cobindemittels, ausgewählt unter ethylenisch ungesättigten (Pre)polymeren mit einem Doppelbindungsgehalt von wenigstens 2 Mol/kg (Pre)polymer und ein- oder mehrfach ethylenisch ungesättigten Monomeren,
ii) wenigstens einen Photoinitiator,
iii) gegebenenfalls ein oder mehrere organische oder anorganische Pigmente,
iv) übliche Hilfsmittel und/oder Verdünnungs- bzw. Lösemittel.

Bevorzugte Ausführungsformen der erfindungsgemäßen Beschichtungsmittel sind pigmenthaltige Beschichtungsmittel, insbesondere in Form einer Druckfarbe oder in Form einer Tinte, speziell für Schreibtinten oder für das Ink-Jet-Verfahren. Allgemeine Rezepturen für Druckfarben und Tinten sind aus dem Stand der Technik bekannt, wobei in die erfindungsgemäßen Tinten und Druckfarben anstelle der üblichen Bindemittel ein erfindungsgemäßes Bindemittel, umfassend wenigstens ein Polymer A und gegebenenfalls ein ethylenisch ungesättigtes Cobindemittel, wie vorstehend definiert, enthalten.

Erfindungsgemäße Tinten, insbesondere solche für das Ink-Jet-Verfahren, enthalten neben dem Bindemittel i) und dem Photoinitiator ii) wenigstens ein organisches oder anorganisches Pigment iii) sowie wenigstens ein organisches Lösungsmittel und/oder Wasser und übliche Hilfsstoffe.

Typische Rezepturen für Tinten für das erfindungsgemäße Verfahren, insbesondere für das Ink-Jet-Verfahren, enthalten in der Regel
i) 0,5 bis 20 Gew.-%, insbesondere 1 bis 10 Gew.-% Bindemittel, wie vorstehend definiert,
ii) gegebenenfalls einen oder mehrere Photoinitiatoren in den oben angegebenen Mengen,
iii) 0,1 bis 20 Gew.-%, insbesondere 0,5 bis 10 Gew.-% Pigment,
iv) 0 bis 10 Gew.-% Hilfsmittel wie sie insbesondere für Ink-Jet-Tinten und in der Druck- oder Lackindustrie üblich sind (siehe auch The Printing Ink Manual, 4th Edition, Van Nostrant Reinhold (International) London (1989)) sowie Lösungsmittel oder Verdünnungsmittel auf insgesamt 100 Gew.-%.

Selbstverständlich können die niedrigviskosen fließfähigen Zubereitungen für das erfindungsgemäße Verfahren auch pigmentfrei, d. h. als "farblose Tinte" formuliert werden. Sie enthalten dann die übrigen Bestandteile i), gegebenenfalls ii), und iv) in den angegebenen Mengen.

Bevorzugt enthalten die Tinten wenigstens 80 Gew.-% wenigstens eines Lösungs- oder Verdünnungsmittels. Geeignete Lösungsmittel sind:
- Monoalkanole:: insbesondere C₁-C₆-Alkanole wie Methanol, Ethanol, n-Propanol, Isopropanol, n-Butanol, Isobutanol sowie Cycloalkanole, z. B. Cyclohexanol;
- Glykole:: vorzugsweise mit 2 bis 4 C-Atomen wie 1,2-Ethandiol, 1,2- und 1,3-Propandiol, 1,4-Butandiol;
- Esteralkohole:: Halbester der vorgenannten Glykole mit Carbonsäuren, vorzugsweise C₁-C₄-Alkancarbonsäuren, insbesondere die Acetate;
- Etheralkohole:: C₁-C₆-Alkylether der vorgenannten Glykole wie Methyl- und Ethylethylenglykol, Methyl- und Ethylpropylenglykol;
- Ester:: Ester aliphatischer Carbonsäuren oder Hydroxycarbonsäure mit den vorgenannten Monoalkanolen, insbesondere die C₁-C₆-Alkylacetate und die C₁-C₄-Alkyllactate, weiterhin Lactone wie γ-Butyrolacton;
- Amide:: Amide und Alkylamide aliphatischer Carbonsäuren, insbesondere Formamide und Acetamide wie Dimethylformamid, Diethylformamid, Dimethylacetamid, weiterhin Lactame und N-C₁-C₄-Alkyllactame, z. B. Pyrrolidon, N-Methyl- und N-Ethylpyrrolidon;
Glycerin;
sowie Mischungen der vorgenannten Lösungsmittel untereinander oder mit Wasser. Vorzugsweise wird der Wasseranteil im Lösungs- bzw. Verdünnungsmittel 80 Vol-%, insbesondere 50 Vol-% nicht überschreiten. In bevorzugten Ausführungsformen ist das Lösungs- bzw. Verdünnungsmittel im Wesentlichen wasserfrei, d. h. es enthält weniger als 10 Vol-% Wasser.

Bevorzugte Lösungsmittel sind solche, die bei Normaldruck im Temperaturbereich von 100 bis 210 °C sieden. Beispiele hierfür sind: Ethylenglykolmonomethylether, Glycerin, Ethylenglykolmonoacetat, N-Methylpyrrolidon, Cyclohexanon, Cyclohexanol, Ethyllactat, Methyllactat, n-Butyllactat und γ-Butyrolacton.

Daneben können die Lösungsmittel auch höher siedende Flüssigkeiten wie 2-Pyrrolidon und Ethoxilate des Glycerins enthalten, vorzugsweise jedoch nicht mehr als 15 Gew.-%, bezogen auf das Gesamtgewicht der Zubereitungen.

Beispiele für Hilfsmittel sind Dispergiermittel, z. B. die in der US-4,218,218, der WO 99/01517 beschriebenen Dispergiermittel, die üblicherweise in einer Menge von 0,1 bis 20 Gew:-% und vorzugsweise in einer Menge von 0,5 bis 10 Gew.-%, bezogen auf das Gesamtgewicht der Tinte verwendet werden. Weitere geeignete Hilfsmittel sind Konservierungsmittel (z. B. Glutardialdehyd und/oder Tetramethylolacetylenharnstoff), Antioxidantien, Entgaser/Entschäumer, Mittel zur Regulierung der Viskosität, Verlaufshilfsmittel, Benetzer, Antiabsetzmittel, Glanzverbesserer, Gleitmittel, Haftverbesserer, Hautverhinderungsmittel, Mattierungsmittel, Stabilisatoren, Hydrophobiermittel, Haftvermittler, Lichtschutzadditive, Griffverbesserer und Antistatikmittel. Die Gesamtmenge der letztgenannten Hilfsmittel beträgt in der Regel weniger als 1 Gew.-%, bezogen auf das Gesamtgewicht der Zubereitung.

Selbstverständlich können die Tinten als Hilfsmittel in untergeordneter Menge auch Füllstoffe oder Wachse enthalten.

Tinten, die Wasser als Verdünnungsmittel enthalten, weisen häufig als Hilfsmittel ein Mittel mit wasserrückhaltender Wirkung auf, insbesondere, wenn sie im Ink-Jet-Verfahren eingesetzt werden sollen. Beispiele für wasserrückhaltende Mittel sind mehrwertige Alkohole, bevorzugt unverzweigte und verzweigte C₃-C₈-Alkanole, wie Glycerin, Erythrit, Pentaerythrit, Pentite, wie Arabit, Adonit und Xylit, Hexite, wie Sorbit, Mannit und Dulcit, wobei Sorbit besonders bevorzugt ist. Mittel mit wasserrückhaltender Wirkung sind auch Polyalkylenglykole mit einem mittleren Molekulargewicht im Bereich von 100 bis 1500, wobei Polyethylenglykole, und insbesondere hierunter solche mit einem mittleren Molekulargewicht ≤ 800 besonders bevorzugt sind. Selbstverständlich sind auch Mischungen verschiedener wasserrückhaltender Mittel, beispielsweise Kombinationen aus Polyalkylenglykolen mit mehrseitigen Alkoholen geeignet und auch bevorzugt. In der Regel enthalten Tinten 0,1 bis 35 Gew.-% und insbesondere 5 bis 25 Gew.-%, bezogen auf das Gesamtgewicht der Zubereitung, wasserrückhaltende Mittel.

Die Herstellung der erfindungsgemäßen Beschichtungsmittel erfolgt nach den hierfür üblichen Verfahren, im Falle der Tinten z. B. durch Dispergieren des Pigments, z. B. eines Presskuchens oder einer kommerziellen Bindemittel/Pigmentmischung in einer Lösung des Polymeren A und gegebenenfalls des Cobindemittels und des Photoinitiators in einem organischen Lösungsmittel und anschließendes Filtrieren.

Das erfindungsgemäße Verfahren, insbesondere die Druckverfahren führen zu Beschichtungen, die insbesondere auf problematischen Substraten, d. h. nicht quellbaren Oberflächen, wie Kunststoffoberflächen und Lacken haften. Außerdem sind die erhaltenen Beschichtungen gegenüber der Einwirkung von Lösungsmitteln wie Toluol, Ethanol, Aceton, Estern wie Ethylacetat, halogenierten Kohlenwasserstoffen, z. B. Chloralkanen und Chlorbenzolen, stabil.

Die erfindungsgemäßen Beschichtungsmittel zeichnen sich im Vergleich zu konventionellen strahlungshärtbaren Beschichtungsmitteln durch eine bessere Stabilität aus.

Die erfindungsgemäßen Beschichtungsmittel in Tintenform ließen sich problemlos verdrucken.

Die folgenden Beispiele sollen das erfindungsgemäße Verfahren erläutern, ohne es jedoch einzuschränken.

### Tinte 1 (Photoinitiator-freie Tinte)

30 g Polyvinylbutyral/Ruß-Chips (Rußgehalt 50 %, BASF Drucksysteme GmbH, Deutschland) wurden in 470 g Propylenglykolmonomethylether dispergiert und über einen 1 µm-Filter der Fa. Pall Gelmann Sciences (Glass-Fiber-Filter extra thick, DIN 60078) filtriert.

### Tinte 2 (Photoinitiator-haltige Tinte) zum Vergleich

60 g Polyvinylbutyral/Ruß-Chips (Rußgehalt 50 %) wurden in 800 g Propylenglykolmonomethylether und 140 g Initiatorlösung dispergiert und anschließend mit einer Zentrifuge (Universal 16 der Fa. Hettich) bei 2500 U/min 20 Minuten zentrifugiert.

Die eingesetzte Initiatorlösung hatte die folgende Zusammensetzung:
- 0,56 g: 2,4,6-Trimethylbenzoyldiphenylphosphinoxid
- 0,56 g: Benzophenon/Hydroxycyclohexylphenylketon-Gemisch (Iragure 500 der Ciba-Spezialitäten-Chemie, Basel)
- 0,56 g: Methyldiethanolamin und
- 138,32 g: Propylenglykolmonomethylether

### Tinte 3 (Tinte mit ethylenisch ungesättigtem Cobindemittel) zum Vergleich

60 g Polyvinylbutyral/Ruß-Chips (50 % Ruß) wurden in einer Mischung von 800 g Propylenglykolmonomethylether und 140 g einer Lösung von 67,3 g eines aromatischen Epoxyacrylats (Laromer® 6777 der BASF Aktiengesellschaft), 1 g 2,4,6-Trimethylbenzoyldiphenylphosphinoxid, 1,6 g Irgacure 500 und 2,7 g Methyldiethanolamin in 67,3 g Propylenglykolmonomethylether suspendiert und anschließend über einen 1 µm-Filter filtriert.

### Anwendungstechnische Prüfungen

### A. Druck auf Polyoxymethylenoberflächen

Mit den Tinten 1 bis 3 wurde unter Verwendung eines handelsüblichen Ink-Jet-Druckkopfs der Fa. XAAR ein Testbild auf eine Polyoxymethylenoberfläche (Cassettes, Tissue Tek III der Fa. Sakura, Japan) gedruckt. Alle Tinten ließen sich problemlos verdrucken. Anschließend wurde das Druckbild mit einem UV-Blitz (4000 J, 1/300 Sekunde, Abstand etwa 4 cm) belichtet.

Die so erhaltenen Drucke überstanden ein 24-stündiges Bad in einer Ethanol/Toluol-Mischung unverändert. Auch nach dieser Behandlung ließen sich die Druckbilder weder mit einem mit Ethanol getränkten Textil noch mit einem in Aceton oder Toluol getränkten Textil abwischen. Die unbelichteten, aber durch IR-Strahlung getrockneten Drucke überstanden das Lösungsmittelbad nicht und verschmierten bei Behandlung mit einem Textil, das mit einem der oben beschriebenen Lösungsmittel getränkt war.

### B. Drucken auf einer Lackschicht

Hierzu wurden die Tinten 1 bis 3 auf die genormte Lackschicht eines Objektträgers (Fa. Menzel, ISO-Norm 8037) in der oben beschriebenen Weise verdruckt und ein Teil der bedruckten Träger in beschriebener Weise belichtet. Die belichteten Proben waren stabil gegenüber Lösungsmitteln, wobei die Tests in der unter A beschriebenen Weise durchgeführt wurden. Die unbelichteten Proben verschmierten bei Behandlung mit einem mit Lösungsmittel getränkten Textil. Insofern wurden die gleichen Ergebnisse gefunden wie für den Druck auf eine Polyoxymethylen-Schicht.

### C. Eignung als Schreibtinte

Die Tinten 1 bis 3 wurden in leere Faserschreiber gefüllt. Mit diesen Faserschreibern beschrieb man die unter A und B genannten Oberflächen und belichtete die Oberfläche in der dort beschriebenen Weise. Die Prüfung erfolgte auf die bei A beschriebene Art und Weise. Man erhielt auch hier eine gegen Lösungsmittel resistente Beschriftung, wohingegen unbelichtete Proben sofort verschmierten.

## Patentansprüche

1. Verfahren zum Beschichten von Substraten, umfassend die folgenden Schritte:
a. Aufbringen eines fließfähigen Beschichtungsmittels auf das zu beschichtende Substrat und
b. Aushärten der so erhaltenen, feuchten Beschichtung durch Bestrahlung mit UV-Licht,
**dadurch gekennzeichnet, dass** das Beschichtungsmittel frei ist von Photoinitiatoren und ein Polymer A als Bindemittel enthält, das weniger als 1 mol/(kg Polymer A) Reaktivgruppen, ausgewählt unter ethylenisch ungesättigten Doppelbindungen und Epoxygruppen, sowie mindestens 2 mol/(kg Polymer A) funktionelle Gruppen der Formel 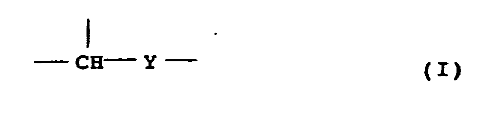 aufweist, worin
Y für N-H oder Sauerstoff steht, und die in den Teilstrukturen der Formeln IA, IB und/oder IC 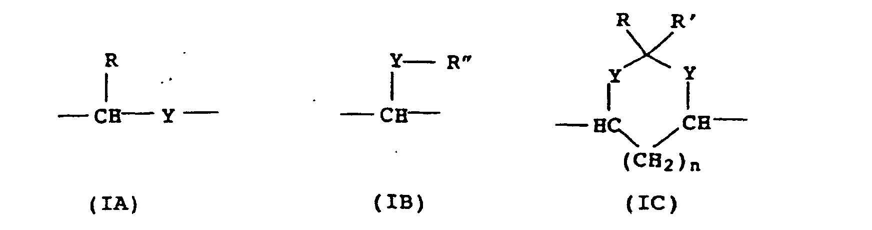 realisiert sind, worin
R, R' unabhängig voneinander für Wasserstoff oder C₁-C₄-Alkyl
R" für C₁-C₂₀-Alkyl stehen,
Y die zuvor genannte Bedeutung hat; und
n 0 oder 1 bedeutet,
wobei die Teilstrukturen der Formel IA, IB oder IC Bestandteile der Polymerkette sind.

2. Verfahren nach Anspruch 1, **dadurch gekennzeichnet, dass** das Polymer A ausgewählt ist unter: Poly-C₁-C₂₀-alkylvinylethern, Polyoxymethylen, Poly-C₂-C₄-alkylenoxiden, Polyetherestern, Polyetheramiden, Polyetherurethanen, acetalisierten Polyvinylalkoholen und ketalisierten Polyvinylalkoholen.

3. Verfahren nach Anspruch 2, **dadurch gekennzeichnet, dass** das Polymer A Polyvinylbutyral ist.

4. Verfahren nach Anspruch 1, wobei das Polymer A ein gewichtsmittleres Molekulargewicht von wenigstens 1000 g/mol aufweist.

5. Verfahren nach einem der vorhergehenden Ansprüche, **dadurch gekennzeichnet, dass** das Beschichtungsmittel 10 bis 90 Gew.-%, bezogen auf die Bindemittelbestandteile im Beschichtungsmittel, wenigstens eines weiteren, ethylenisch ungesättigten Cobindemittels, das ausgewählt ist unter ethylenisch ungesättigten Prepolymeren mit einem Doppelbindungsgehalt von wenigstens 2 mol/kg (Pre)polymer, ein- oder mehrfach ethylenisch ungesättigten Monomeren und deren Mischungen.

6. Verfahren nach einem der Ansprüche 1 bis 4, **dadurch gekennzeichnet, dass** das Beschichtungsmittel kein ethylenisch ungesättigtes Cobindemittel enthält.

7. Verfahren nach einem der vorhergehenden Ansprüche, **dadurch gekennzeichnet, dass** das Aufbringen der fließfähigen Beschichtung in Schritt a. nach einem Druckverfahren erfolgt.

8. Verfahren nach Anspruch 7, **dadurch gekennzeichnet, dass** das Aufbringen der fließfähigen Beschichtung in Schritt a. durch ein Ink-Jet-Verfahren erfolgt.

9. Verfahren nach einem der vorhergehenden Ansprüche, **dadurch gekennzeichnet, dass** man in Schritt b. zusätzlich IR-Strahlung auf die feuchte Beschichtung einwirken lässt.

10. Verfahren nach einem der vorhergehenden Ansprüche, **dadurch gekennzeichnet, dass** man das Beschichtungsmittel in einer Menge aufbringt, dass eine Trockenschichtdicke < 10 µm resultiert.

11. Verfahren nach einem der vorhergehenden Ansprüche, **dadurch gekennzeichnet, dass** das Beschichtungsmittel mehr als 80 Gew.-% Lösungsmittel enthält.

## Claims

1. A method of coating substrates including the following steps:
a. applying a flowable coating composition to the target substrate and
b. curing the resulting wet coating by irradiation with UV light,
wherein said coating composition is free of photoinitiators and comprises as binder a polymer A containing less than 1 mol/(kg of polymer A) of reactive groups, selected from ethylenically unsaturated double bonds and epoxy groups, and at least 2 mol/(kg of polymer A) of functional groups of the formula 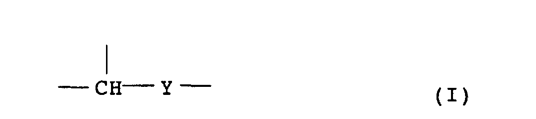 where
Y is N-H or oxygen, which are embodied in the substructures of the formulae IA, IB and/or IC 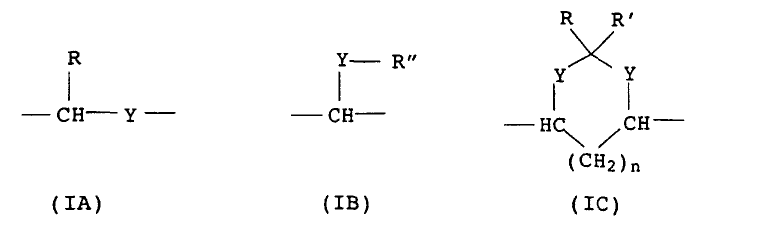 where
R and R' independently of one another are hydrogen or C₁-C₄-alkyl
R" is C₁-C₂₀-alkyl,
Y is as defined above, and
n is 0 or 1,
the structural units of the formula IA, IB or IC being constituents of the polymer chain.

2. A method as claimed in claim 1, wherein said polymer A is selected from poly-C₁-C₂₀-alkyl vinyl ethers, polyoxymethylene, poly-C₂-C₄-alkylene oxides, polyether esters, polyether amides, polyether urethanes, acetalized polyvinyl alcohols and ketalized polyvinyl alcohols.

3. A method as claimed in claim 2, wherein said polymer A is polyvinyl butyral.

4. A method as claimed in claim 1, wherein said polymer A has a weight average molecular weight of at least 1000 g/mol.

5. A method as claimed in any of the preceding claims, wherein said coating composition contains from 10 to 90% by weight, based on the binder constituent in the coating composition, of at least one further, ethylenically unsaturated cobinder selected from ethylenically unsaturated prepolymers having a double bond content of at least 2 mol/kg of (pre)polymer, mono- or polyethylenically unsaturated monomers, and mixtures thereof.

6. A method as claimed in any of the preceding claims, wherein the coating composition contains no ethylenically unsaturated cobinder.

7. A method as claimed in any of the preceding claims, wherein said applying of said flowable coating in step a. is performed by a printing process.

8. A method as claimed in claim 7, wherein said applying of said flowable coating in step a. is performed by an ink-jet process.

9. A method as claimed in any of the preceding claims, wherein additionally in step b. the wet coating is exposed to IR radiation.

10. A method as claimed in any of the preceding claims, wherein said coating composition is applied in an amount such as to give a dry film thickness < 10 µm.

11. A method as claimed in any of the preceding claims, wherein the coating composition contains more than 80% by weight of solvents.

## Revendications

1. Procédé d'enduction de substrats, comprenant les étapes suivantes :
a. une application d'un produit d'enduction fluide sur le substrat à enduire, et
b. un durcissement de l'enduction humide ainsi obtenue par irradiation à la lumière U.V.,
**caractérisé en ce que** le produit d'enduction est exempt de photo-initiateurs et contient, comme liant, un polymère A qui présente moins de 1 mole/(kg de polymère A) de groupes réactifs choisis parmi des doubles liaisons éthyléniquement insaturées et des groupes époxy, ainsi qu'au moins 2 moles/(kg de polymère A) de groupes fonctionnels de la formule : 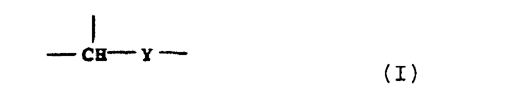 dans laquelle
Y représente N-H ou de l'oxygène, qui sont réalisés dans les structures partielles des formules IA, IB et/ou IC : 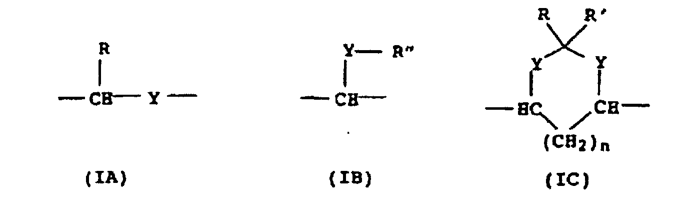
dans lesquelles
R,R' représentent indépendamment l'un de l'autre de l'hydrogène ou un groupe alkyle en C₁-C₄,
R" représente un groupe alkyle en C₁-C₂₀,
Y a la signification donnée précédemment, et
n signifie 0 ou 1,
les structures partielles des formules IA, IB ou IC étant des éléments de la chaîne de polymère.

2. Procédé suivant la revendication 1, **caractérisé en ce que** le polymère A est choisi parmi des poly-C₁-C₂₀-alkylvinyléthers, du polyoxyméthylène, des poly-C₂-C₄-alkylèneoxydes, des polyétheresters, des polyétheramides, des polyétheruréthannes, des alcools polyvinyliques acétalisés et des alcools polyvinyliques cétalisés.

3. Procédé suivant la revendication 2, **caractérisé en ce que** le polymère A est du polyvinylbutyral.

4. Procédé suivant la revendication 1, dans lequel le polymère A présente un poids moléculaire moyen pondéral d'au moins 1000 g/mole.

5. Procédé suivant l'une des revendications précédentes, **caractérisé en ce que** le produit d'enduction contient 10 à 90% en poids, par rapport aux composants de liant dans le produit d'enduction, d'au moins un autre coliant éthylénique insaturé, qui est choisi parmi des prépolymères éthyléniquement insaturés présentant une teneur en doubles liaisons d'au moins 2 moles/kg de (pré)polymère, des monomères éthyléniquement insaturés à une ou à plusieurs reprises et leurs mélanges.

6. Procédé suivant l'une des revendications 1 à 4, **caractérisé en ce que** le produit d'enduction ne contient pas de coliant éthyléniquement insaturé.

7. Procédé suivant l'une des revendications précédentes, **caractérisé en ce que** l'application de l'enduction fluide dans l'étape a. a lieu après un procédé d'impression.

8. Procédé suivant la revendication 7, **caractérisé en ce que** l'application de l'enduction fluide dans l'étape a. a lieu par un procédé à jet d'encre.

9. Procédé suivant l'une des revendications précédentes, **caractérisé en ce que**, dans l'étape b., on laisse en outre agir un rayonnement IR sur l'enduction humide.

10. Procédé suivant l'une des revendications précédentes, **caractérisé en ce qu'**on applique le produit d'enduction en une quantité qui donne une épaisseur de couche à sec < 10 *µ*m.

11. Procédé suivant l'une des revendications précédentes, **caractérisé en ce que** le produit d'enduction contient plus de 80% en poids de solvant.
